Europäisches Patentamt

European Patent Office

Office européen des brevets

(11) Veröffentlichungsnummer: **0 036 955**
**B1**

# (12) EUROPÄISCHE PATENTSCHRIFT

(45) Veröffentlichungstag der Patentschrift:
16.01.85

(21) Anmeldenummer: 81101468.7

(22) Anmeldetag: 28.02.81

(51) Int. Cl.⁴: **B 23 Q 7/14**

(54) Vorrichtung zum Anhalten von Werkstückträgern, Werkstücken oder dgl. die auf einem Förderer durch eine Fertigungsstrasse bewegt werden.

(30) Priorität: 29.03.80 DE 3012277

(43) Veröffentlichungstag der Anmeldung:
07.10.81 Patentblatt 81/40

(45) Bekanntmachung des Hinweises auf die Patenterteilung:
16.01.85 Patentblatt 85/3

(84) Benannte Vertragsstaaten:
CH DE FR GB IT LI

(56) Entgegenhaltungen:
FR - A - 2 420 405
US - A - 2 577 766
US - A - 2 672 675
US - A - 2 955 347
US - A - 3 571 872

(73) Patentinhaber: ROBERT BOSCH GMBH, Postfach 50,
D-7000 Stuttgart 1 (DE)

(72) Erfinder: Rothfuss, Peter, J.-S.-Bach-Strasse 6/1,
D-7257 Ditzingen 5 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung geht aus von einer Vorrichtung nach der Gattung des Hauptanspruchs. Bei mit derartigen Vorrichtungen versehenen Fertigungsstrassen wird das zu bearbeitende Werkstück auf Werkstückträgern verschiedenen Bearbeitungsstationen nacheinander zugeführt. An der jeweiligen Bearbeitungsstation muss der Werkstückträger angehalten werden, wobei das Förderelement, z.B. ein Fördergurt, unter dem Werkstückträger gegebenenfalls weiter durchlaufen kann. Bei einer bekannten Vorrichtung der gattungsmässigen Art (FR-A-2 420 405) ist der Stössel des Kraftantriebs an den Anschlagnocken angelenkt, der als zweiarmiger Hebel ausgebildet ist. Der Kraftantrieb selbst besteht aus einem mit dem Stössel verbundenen Kolben und einem pneumatischen Zylinder; welcher seinerseits an das gestellartige Gehäuse der Vorrichtung schwenkbar angelenkt ist. Bei dieser Vorrichtung wird die Lage der Sperrfläche am Anschlagnocken in dessen Sperrstellung durch eine Vielzahl von Toleranzen beeinflusst und ferner ist nachteilig, dass die beim Anhalten des Werkstücks od. dgl. auf den Anschlagnocken ausgeübte Reaktionskraft auf dessen Schwenklager sowie auf den Kraftantrieb und dessen Gelenke übertragen wird. Diese Reaktionskraft kann bei entsprechend grosser Fördergeschwindigkeit und Masse des Werkstückträgers bzw. des Werkstücks beträchtlich sein und das Schwenklager sowie die Gelenke erheblich beanspruchen und abnutzen.

Aufgabe der Erfindung ist es, die geschilderten Nachteile zu vermeiden.

### Vorteile der Erfindung

Die erfindungsgemässe Anordnung mit den kennzeichnenden Merkmalen des Hauptanspruchs hat demgegenüber den Vorteil, dass der Kraftantrieb ohne Gelenke auskommt und dass die beim Anhalten eines Werkstückträgers od. dgl. auf den Anschlagnocken ausgeübte Reaktionskraft über grössere Berührungsflächen auf das Gehäuse übertragen wird. Dabei werden das Schwenklager des Anschlagnockens und die die Reaktionskraft aufnehmenden bzw. übertragenden Flächen an den Teilen wesentlich geringer als bei der bekannten Anordnung beansprucht. Die erfindungsgemässe Vorrichtung kann darüber hinaus sehr kompakt und so ausgebildet werden, dass sie sich bequem an den Förderer bzw. in diesen einbauen lässt.

Durch die in den Unteransprüchen aufgeführten Massnahmen sind vorteilhafte Weiterbildungen der im Hauptanspruch angegebenen Anordnung möglich.

Besonders vorteilhaft ist es, wenn die Berührungsflächen am Stösselkopf und Anschlagnocken mit der Stösselachse einen Winkel von 5 bis 15°, vorzugsweise 10° einschliessen. Dadurch ist erreicht, dass die auf den Kraftantrieb in Richtung der Stösselachse übertragene Reaktionskraftkomponente sehr gering ist, so dass zumindest auch die den Stössel in die Sperrstellung überführende Kraft relativ schwach bemessen sein kann.

In Auswertung dieser Erkenntnis wird weiter vorgeschlagen, dass zur Ausübung dieser Kraft eine Schraubenfeder vorgesehen ist, die den Stössel gegen die Sperrstellung drückt.

Eine einfache Ausführung, die ohne zusätzliche Gehäuseteile auskommt, ergibt sich, wenn der Stössel einen pneumatischen oder hydraulischen Kraftantrieb mit einem unmittelbar in einer Gehäusebohrung geführten Kolben hat.

Ein besonderes Teil zum Erzeugen der auf den Anschlagnocken ausgeübten Rückführkraft entfällt, wenn der Anschlagnocken ausserhalb seines Schwerpunktes schwenkbar gelagert ist und die auf ihn einwirkende Rückführkraft die in seinen Schwerpunkt angreifende Gewichtskraft ist.

### Zeichnung

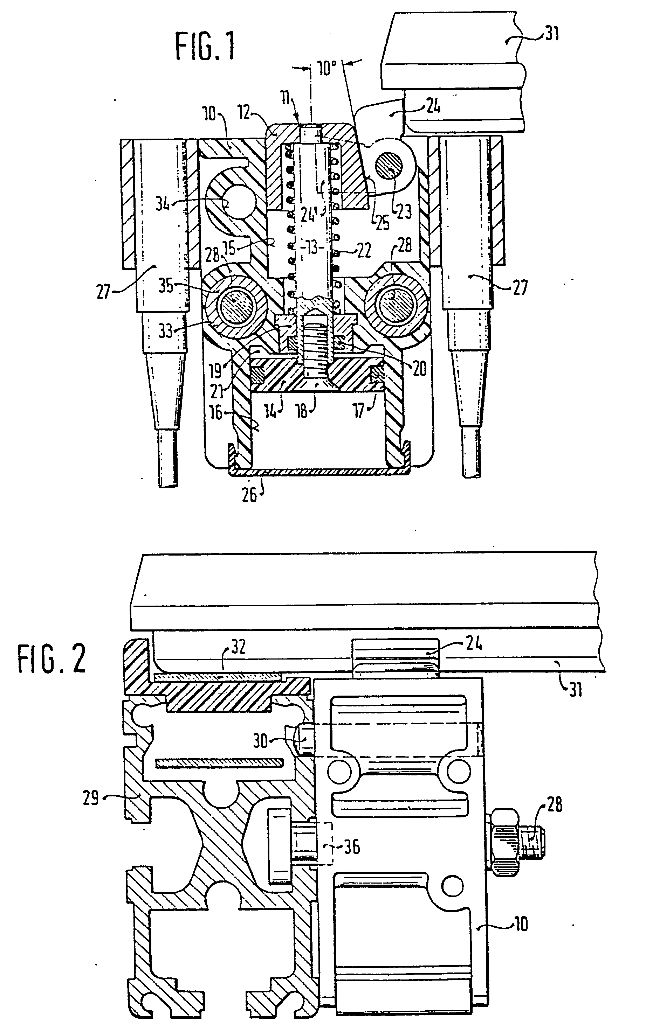

Ein Ausführungsbeispiel der Erfindung ist in der Zeichnung dargestellt und in der nachfolgenden Beschreibung unter Angabe weiterer Vorteile näher erläutert. Es zeigen Fig. 1 einen Schnitt durch die erfindungsgemässe Vorrichtung und Fig. 2 ein Einbaubeispiel der Vorrichtung nach Fig. 1 an einer Doppelgurt-Bandanlage.

### Beschreibung des Ausführungsbeispiels

Die Vorrichtung hat ein Gehäuse 10, in welches ein Stössel 11 eingebaut ist. Der Stössel 11 besteht im wesentlichen aus einem Stösselkopf 12, einer Verbindungsstange 13 und einem Kolben 14. Der Stösselkopf 12 wird mindestens an einer Seitenfläche 15 des Gehäuses 10 axial geführt. Die Verbindungsstange 13 ist mit dem Stösselkopf 12 fest verbunden.

An der dem Stösselkopf 12 gegenüberliegenden Seite der Verbindungsstange 13 befindet sich der Kolben 14, der in einer zylindrischen Bohrung 16 im Gehäuse 10 mittels der Dichtung 17 abgedichtet geführt ist. Der Kolben 14 ist mittels einer Schraube 18 mit der Verbindungsstange 13 verbunden. Eine Führungsbuchse 19 mit einer Dichtung 20 dient der Führung der Verbindungsstange 13 im Gehäuse 10 sowie der Abdichtung eines mit Druckmedium zu beaufschlagenden Raums 21.

Die Verbindungsstange 13 des Stössels 11 ist von einer Schraubenfeder 22 umgeben, die sich an der einen Seite an der Führungsbuchse 19 und an der anderen Seite am Stösselkopf 12 abstützt.

Im oberen Bereich des Gehäuses 10 befindet sich ein Schwenklager 12 für einen Anschlagnocken 24. Der Anschlagnocken 24 ist nicht mit dem Stösselkopf 12 über ein Kippgestänge od. dgl. verbunden. In der in Fig. 1 dargestellten Sperrstellung des Anschlagnockens 24 schliesst dieser an seiner dem Stösselkopf 12 zugewandten Seite und der Gehäuseachse einen Winkel von 5–15°, vorzugsweise 10°, ein. Die schrägen Berührungsflächen 25 an Anschlagnocken 24 und Stösselkopf 12 dienen als Halteflächen des Anschlagnockens 24 in Sperrstellung.

Der untere Teil des Gehäuses 10 ist mit einem Schnappdeckel 26 verschlossen. In diesem Bereich kann jedoch auch eine Bodenplatte mit weiteren Anschlüssen für die Zufuhr von Druckmedium vorgesehen werden.

Das Gehäuse 10 ist als prismatisches Gehäuse, vorzugsweise mit einem Rechteckquerschnitt ausgebildet. Am oder im Gehäuse sind Sensoren 27, vorzugsweise induktive Sensoren, angebracht, die zur Lageerkennung des Werkstückträgers dienen.

In Fig. 2 ist als Einbaubeispiel der erfindungsgemässen Vorrichtung ein Längsschnitt durch eine Doppelgurt-Bandanlage dargestellt. Ein aus Kunststoff gefertigtes Gehäuse 10 enthält Durchgangsbohrungen 33 mit eingesetzten Metallbuchsen 35 und ist mittels Schrauben 28 (z.B. Hammerschrauben nach DIN 188) an einem Tragprofil 29 des Doppelgurtbandes befestigt. Durch die Metallbuchsen 35 wird eine Druckentlastung des Gehäuses 10 beim Anziehen der Schrauben 28 erreicht. Das Gehäuse 10 wird durch eine seitlich zwischen den Bohrungen am Gehäuse einzusetzende Passfeder 36, die in die T-Nut im Tragprofil 29 eingreift, in seiner Höheposition fixiert. Die länglich ausgebildete Passfeder 36 nimmt auch den Anschlagdruck der Werkstückträger auf. Das Umsetzen der Passfeder erlaubt die Anbringung der Vorrichtung links oder rechts am Bandprofil. Zur genaueren Justierung des Gehäuses kann in einer weiteren Bohrung 34 im Gehäuse 10 ein Bolzen 30 eingesetzt werden.

Die erfindungsgemässe Vorrichtung arbeitet wie folgt: Im Ruhezustand, d.h. ein Werkstückträger soll nicht angehalten werden, befindet sich der in Fig. 1 dargestellte Stössel 11 in seiner unteren Lage. Durch Beaufschlagung des Druckmittelraums 21 oberhalb des Kolbens 14 mit Druckluft, wird der Kolben 14 in eine untere Lage gebracht. Hierdurch steht der Stösselkopf 12 nicht mit dem Anschlagnocken 24 in Berührung. Durch den aussermittig liegenden Schwerpunkt des Anschlagnockens 24 kippt dieser in die in Fig. 1 strichpunktiert eingezeichnete Schräglage 24'. Hierdurch verschwindet der Anschlagnocken 24 im Gehäuse 10.

Der Anschlagnocken 24 wird in die Sperrstellung, d.h. in die Stellung zum Anhalten des Werkstückträgers 31 gebracht, in dem der Druck im Druckmittelraum 21 vermindert wird (Stellung des Stössels in Fig. 1 und 2). In diesem Fall drückt die Schraubenfeder 22 den Stösselkopf 12 axial nach oben, wobei der Anschlagnocken 24 über die Berührungsflächen 25 nach oben gedrückt und gehalten wird. Bei einem Winkel von ca. 10° zwischen Berührungsflächen 25 und Stösselachse tritt eine Selbsthaltung des Anschlagnockens 24 ein. Gleichzeitig wird über die Sensoren 27 der ankommende Werkstückträger 31 registriert. Der Anschlagnocken 24 kann durch Aussparungen im unteren Bereich des Werkstückträgers 31 durchgleiten und den Werkstückträger 31 an verschiedenen Halteflächen stoppen. Das Transportband 32 läuft während des Haltezustands unter dem Werkstückträger 31 weiter.

Die Sperrung des Werkstückträgers 31 durch den Anschlagnocken 24 wird aufgehoben, indem der Druckmittelraum 21 mit Druckluft beaufschlagt wird. Der Kolben 14 und mit diesem der Stössel 11 wird dann in die untere Ruhestellung gebracht, wobei der Anschlagnocken 24 durch Eigengewicht oder durch Schub vom Werkstückträger 31 in das Gehäuse 10 eingeschwenkt wird. Bei Ausfall der Druckluft geht die Vorrichtung durch Federkraft der Schraubenfeder 22 automatisch in die Sperrstellung. Damit werden die Werkstückträger 31 gestoppt.

Durch zusätzliches Anbringen einer Bodenplatte mit zugehörigen Anschlüssen kann die Vorrichtung mittels Druckluft geöffnet und geschlossen werden. Im Ausführungsbeispiel ist statt der Bodenplatte jedoch nur ein Schnappdeckel 26 vorgesehen.

**Patentansprüche**

1. Vorrichtung zum Anhalten von Werkstückträgern, Werkstücken od. dgl., die auf einem Förderer durch eine Fertigungsstrasse bewegt werden, mit einem an den Förderer anbaubaren Gehäuse (10), in welchem ein Anschlagnocken (24) zwischen einer Sperr- und einer Durchlaufstellung schwenkbar gelagert ist, auf den ein steuerbarer Kraftantrieb (14) über einen axial geführten Stössel (11) mit einem Stösselkopf (12) einwirkt und wobei der Anschlagnocken (24) stetig unter dem Einfluss einer Rückführkraft steht, dadurch gekennzeichnet, dass der Stösselkopf (12) des Kraftantriebs (14) zum Verschwenken des Anschlagnockens (24) in die Sperrstellung zwischen dessen Schwenklager (23) und eine in Förderrichtung gesehen stromab des Schwenklagers (23) angeordnete Führungsfläche (15) am Gehäuse (10) tritt, wobei aneinander angepasste Berührungsflächen (25) am Anschlagnocken (24) und Stösselkopf (12) zur gegenseitigen Anlage kommen und sich danach der Anschlagnocken (24) über den Stösselkopf (12) an der Führungsfläche (15) abstützt.

2. Vorrichtung nach Anspruch 1, dadurch gekennzeichnet, dass die Berührungsflächen (25) an Stösselkopf (12) und Anschlagnocken (24) mit der Stösselachse einen Winkel von 5 bis 15°, vorzugsweise 10°, einschliessen.

3. Vorrichtung nach Anspruch 1 oder 2, dadurch gekennzeichnet, dass der Stössel (11) durch eine Schraubenfeder (22) in die Sperrstellung gedrückt ist.

4. Vorrichtung nach einem der Ansprüche 1 bis 3, dadurch gekennzeichnet, dass der Stössel (11) einen pneumatischen Kraftantrieb mit einem unmittelbar in einer Gehäusebohrung (16) geführten Kolben (14) hat.

5. Vorrichtung nach einem der Ansprüche 1 bis 4, dadurch gekennzeichnet, dass der Anschlagnocken (24) ausserhalb seines Schwerpunkts schwenkbar gelagert ist und dass die stetig in Richtung Durchlaufstellung auf den Anschlagnocken (24) einwirkende Rückführkraft die im Schwerpunkt angreifende Gewichtskraft ist.

**Claims**

1. Device for stopping workpiece carriers, workpieces or similar which are moved along a production line on a conveyor, having a housing (10) which can be attached to the conveyor, in which housing (10) a stop dog (24) is pivotally mounted between a stop position and a continuous position, a controllable power drive (14) acting on the stop dog (24) via an axially guided ram (11) with a ram head (12), and the stop dog (24) being continually under the effect of a restoring force, characterised in that the ram head (12) of the power drive (14), in order to swing the stop dog (24) into the stop position, moves between the pivot bearing (23) of the stop dog (24) and a guide surface (15) arranged on the housing (10) downstream from the pivot bearing (23) as viewed in the direction of conveying, contact surfaces (25) adapted to one another at the stop dog (24) and ram head (12) coming into mutual contact, and the stop dog (24) subsequently being supported at the guide surface (15) by the ram head (12).

2. Device according to Claim 1, characterised in that the contact surfaces (25) at the ram head (12) and stop dog (24) enclose an angle of 5 to 15°, preferably 10°, with the ram axis.

3. Device according to Claim 1 or 2, characterised in that the ram (11) is pressed into the stop position by a helical spring (22).

4. Device according to one of Claims 1 to 3, characterised in that the ram (11) has a pneumatic power drive with a piston (14) guided directly inside a housing bore (16).

5. Device according to one of Claims 1 to 4, characterised in that the stop dog (24) is pivotally mounted outside its centre of gravity and that the restoring force constantly acting on the stop dog (24) in the direction of the continuous position is the weight force acting at the centre of gravity.

**Revendications**

1. Dispositif pour la mise à l'arrêt de supports de pièce, ou de pièces elles-mêmes ou analogues, qui sont déplacés sur un transporteur à travers une ligne de fabrication, comprenant un carter (10) pouvant être monté sur le transporteur, dans lequel une came de butée (24) est supportée pour pouvoir être pivotée entre une position de blocage et une position de traversée du dispositif, came sur laquelle agit, avec une tête de poussoir (12), un poussoir guidé axialement, qui est maintenu en permanence sous l'influence d'une force de rappel en position, dispositif caractérisé en ce que la tête de poussoir (12) du mécanisme d'entraînement (14), pour faire pivoter la came de butée (24) dans la position de blocage, est appliquée entre son palier de pivotement (23) et une surface de guidage (15), disposée sur le carter (10) en aval, vue en direction du transport, du palier de pivotement (23), auquel cas des surfaces de contact (25) adaptées entre elles, sur la came de butée (24) et sur la tête de poussoir (12) viennent s'appliquer l'une sur l'autre, et la came de butée (24) est maintenue par la tête de poussoir (12) sur la surface de guidage (15).

2. Dispositif suivant la revendication 1, caractérisé en ce que les surfaces de contact (25) sur la tête de poussoir (12) et sur la trame de butée (21) forment, avec l'axe du poussoir, un angle compris entre 5 et 15 degrés, de préférence égal à 10 degrés.

3. Dispositif suivant l'une des revendications 1 ou 2, caractérisé en ce que le poussoir (11) est pressé dans sa position de blocage par un ressort hélicoïdal (22).

4. Dispositif suivant l'une des revendications 1 à 3, caractérisé en ce que le poussoir (11) comporte un entraînement pneumatique avec un piston (14) guidé directement dans un alesage du carter (16).

5. Dispositif suivant l'une quelconque des revendications 1 à 4, caractérisé en ce que le bossage de butée (24) est supporté a pivotement extérieurement a son centre de gravité et que la force de rappel agissant sur le bossage de butée (24) en direction permanente de la position de traversée est une force de gravité attaquant le centre de gravité.

FIG.1

FIG.2